# EUROPEAN PATENT APPLICATION

(11) **EP 2 298 619 A2**
(43) Date of publication of application: **23.03.2011**
(21) Application number: 10166919.0
(22) Date of filing: 22.06.2010
(51) Int. Cl.: B62B 7/14, A47D 1/06

(54) **Infant seat and process to manufacture an infant seat**

(30) Priority: 17.09.2009 TW 098131349
(71) Applicant: Kho, David Chuanhankho, 46785 La Pobla de Vallbona (ES); Wang, En-Chi, T'ai chung (TW)
(72) Inventor: Kho, David Chuanhankho, 46785 La Pobla de Vallbona (ES); Wang, En-Chi, T'ai chung (TW)
(74) Representative: Fritz, Edmund Lothar

(57) **Abstract**

The present invention refers to an infant seat particularly for a releasable mounting on a baby carriage, which is shaped it its upper part according to a contour which enables an infant to take a sitting or lying position therein, said infant seat comprising at least one upper shell (12), which has been formed from a thermoplastic composite material in a thermoforming process. The principal idea of the present invention is to provide a solid infant seat, which may receive a baby in a sitting/lying position, carrying it safe and comfortably, but which may be detachably mounted to a base frame of a baby carriage in a simple manner as well. Said infant seat may be compared to an infant seat for cars, which concerns function and stability rather than to a conventional baby carriage with textile clothing serving as the seating area. The present invention provides an infant seat which is constructed of shells, which is solid and comfortable, has an upper seating/lying area of high value and can be manufactured at low cost in serial production.

## Description

The present invention refers to an infant seat, particularly for releasable mounting it to a baby carriage, which is shaped it its upper part according to a contour which enables an infant to take a sitting or lying position therein.

According to the state of the art infant seats are manufactured by fixing a cover fabric to a padding material, for example by sewing or adhesive bonding. Because sewing operations need a high expenditure of human labor, there is a need for a new process which enables a cheaper manufacturing in serial production.

The present invention refers to a new kind of infant seat, which is built up according to a shell technology as it is disclosed in applicant's separate German patent application EP 10000764 filed on January 26, 2010, which has not yet been published and the whole content of which is incorporated herein by reference. Said kind of infant seat includes a separate unit which serves as a carry cot and which is disposed beneath an upper shell of the infant seat, having the shape of a seat. In such a case a removable carry cot is integrated into the infant seat. Thus the upper shell must be carried out such that beneath said shell, preferably between said upper shell and an additional lower shell, there is a cavity of sufficient size. With this shell technology the upper shell consequently must be of lower material thickness, because the space beneath the upper shell must be available for the storage of the carry cot. This cavity therefore cannot be filled with padding material. In such a case the upper shell must be designed as to serve as a structural element and at the same time it must provide a seat area(lying area, bearing surface) of sufficient stability and thin material thickness.

It is the object of the present invention to provide an infant seat of the above mentioned kind which can be manufactured in serial production at low cost and which has a seat area or bearing surface of high value in the upper surface region, which corresponds to the above requirements.

The solution to this object is provided by an infant seat with the characterizing features of the main claim. According to the present invention said infant seat comprises at least one upper shell which has been formed from a thermoplastic composite material in a thermoforming process.

Preferably as a starting material for this thermoforming process a sheet like laminate of thermoplastic material and at least one foam is used. As the plastic material for instance a copolymer may be used, for example this can be ethylene vinyl acetate or the like. The advantage of such a thermoplastic material as ethylene vinyl acetate is that it is possible to cross-link such a material by thermoforming at elevated temperatures. Such material provides an upper shell of an infant seat with a comfortable surface feel, which also exhibits after the forming process a rigidity, which is sufficient for this purpose, as well as certain resilience. The surface of such a composite material can be for example smooth and leather-like.

The foam layer of the laminate for example may comprise polyurethane. If ethylene vinyl acetate is combined with polyurethane-foam the laminate is made more resilient.

The thermoforming process results in a kind of shell made of a composite material, which is dimensionally stable and self-supporting and shaped according to the contour of the seat area, which nevertheless allows a deformation under manual forces within certain limits, the shell thereby showing recovery (resilience). This means the shell maintains its contour, but is easier to deform than a conventional hard shell and provides more comfort for the infant.

According to a preferred embodiment of the present invention said laminate may comprise an additional surface layer of a textile material.

When manufacturing a shell for an infant seat prefereably a sheet comprising several layers (laminate sheet) comprising a structural layer (prefereably ethylene vinyl acetate) and a soft layer (prefereably polyurethane) is first heated. Thereby the thermoplastic material is softened plastically and thereafter shaped in a thermoforming mold, if necessary under influence of vacuum and then cooled by contact with the surface of the mold. The heating may induce a cross-linking of the plastic material of the structural layer, which results in a solidification of the molded article as well.

According to a preferred embodiment of the present invention the infant seat comprises an upper shell and a lower shell, both shells thereby being formed by a thermoforming process starting from a laminate material, respectively. In this case it is sufficient if the upper shell exhibits the contour of the seat and the lower shell just has a simple shape, concave at its upper side. Preferably both shells have a similar perimeter contour and both shells can be joined in a detachable manner in an arrangement where the shells lie one upon the other, resulting in a hollow space (cavity) between them, the upper shell being partly received by the receiving space of the lower shell, which means both shells partly lie one within the other. The resulting cavity makes it possible to include a carry cot between the two shells, which then may be uncased if required and may be used separately from the infant seat.

The principal idea of the present invention is to provide a solid infant seat, which may receive a baby in a sitting/lying position, carrying it safe and comfortably, but which may be detachably mounted to a base frame of a baby carriage in a simple manner as well. Said infant seat may be compared to an infant seat for cars, which concerns function and stability rather than to a conventional baby carriage with textile clothing serving as the seating area. Additionally a carry cot is integrated into said infant seat, which means the carry cot is not the result of a mere transformation of the seat area of a baby carriage. A rather simple solution one could provide a detachably mounted upper shell as the seat surface area, the carry cot arranged underneath said upper shell, both parts thereby forming a unit. This has the advantage that the user transporting the infant seat always carries a carry cot with him within the infant seat, which is hidden under the upper shell of the seat.

According to one preferred embodiment of the present invention the separate unit serving as a carrycot in the seat configuration is disposed between an upper shell and at least one lower shell of the infant seat. In the mounted condition the infant seat forms a unit consisting of an upper shell and at least one lower shell, whereas both of them each can be composed of several parts as well. The carrycot is disposed as in a kind of sandwich structure between upper shell and lower shell of this arrangement. In the seat configuration or when transporting the infant seat the unit serving as carrycot can be housed between upper shell and at least one lower shell and it can be completely encased by upper shell and lower shell, such that in the seat configuration of the infant seat the carrycot is even not visible from outside. This is an advantage as the user carrying the portable infant seat disposes of a carrycot as well, if he needs one. It is not necessary to take any time-consuming measurements to change functionality. It is sufficient to separate upper and lower shells, take out the carrycot and if necessary to transform it in such a manner that it complies with the carry function. Upper shell and lower shell(s), when connected with each other, form a complete solid self-supporting infant seat, which additionally serves as a housing for the carrycot.

Preferably upper shell and lower shell(s) can be connected to each other in their respective border areas to result in a single unit, preferably a circumferential connection between them is provided using for instance zip fasteners or hook-and-loop fasteners or any other suitable connecting means. In such a case the respective connection between upper shell and lower shell(s) can be easily disconnected and the separate unit serving as a carrycot can be uncased.

In the seat configuration the carrycot preferably presents itself in a folded condition, in which it exhibits a low height only. In such a case the carrycot can be housed in the space formed between upper shell and lower shell without any difficulties.

The carrycot preferably comprises an outer (circumferential) frame, a foldable side area and a bottom. In the folded state the height of the carrycot essentially is defined by the height of the frame only. By unfolding the foldable side area in a direction essentially perpendicular to the bottom, the carrycot uncased from the infant seat can be brought into a condition ready for use, in which it has enough space to take up a baby in a lying position. In this condition the "carry configuration" according to the definition herein has been reached. In this configuration the foldable side area is stretched and preferably buttress elements are provided which stabilize the unfolded condition and which serve to avoid an unintentional refolding of the carrycot into the folded flat condition.

Preferably the infant seat according to the present invention comprises at least one handle bar, for example a bar or bracket essentially in U-shape, which can be mounted to the infant seat in its seat configuration in a detachable manner and which additionally can be mounted in a detachable manner to the carrycot, too. With such a handle bar the user has means to lift the infant seat in its whole and to carry it conveniently. If the infant seat is to be converted, the user first detaches the handle bar, then releases the connection between upper shell and the further elements of the infant seat, and takes off the upper shell so that then the carrycot can be uncased. Then the carrycot is unfolded in its condition ready for use and the handle bar is mounted to the carrycot, thus it can be carried. It is an advantage that the same handle bar is used in both configurations, so that no separate further element is needed to carry the carrycot.

The detachable mounting of the handle bar can for example be realized using push-in connecting means, provided at the handle bar and on a frame respectively to which the handle bar is mounted, said frame preferably being part of the carrycot. This solution has the advantage that after disassembling of the infant seat the frame to which the handle bar is connected is already located at the carrycot.

The handle bar is preferably detachably mounted to the infant seat and/or to the carrycot by snap or click connecting means. This presents a connection which can be easily and comfortably released and which is secure as well.

According to a preferred embodiment of the present invention the infant seat can be detachably mounted to the base frame of a baby carriage in the seat configuration, said infant seat in this seat configuration thereby comprising the carrycot. If the infant seat is dismounted from the base frame the user disposes of a carrycot as well, which forms part of said infant seat, which is a separate element and preferably is located within the infant seat under the upper shell.

According to a preferred embodiment of the invention the infant seat can not only be mounted on a base frame of a baby carriage in a detachable manner, but in the seat configuration it can alternatively by means of fastening elements also be mounted for example to a stand as well. The use of the infant seat according to the present invention is therefore not limited to the use in connection with a baby carriage. Such a stand for example can be a kind of support frame as it is used to lay down a baby in a raised position, for instance in a bathroom. Said stand can for example form a kind of children high chair in connection with the infant seat. This option of the invention has the advantage that the necessary fastening elements can be provided on the infant seat and on the carrycot as well. If said fastening elements are for instance provided on said frame which forms part of the carrycot, the carrycot can also be mounted on the stand after the infant seat has been converted to the carry configuration.

Connecting elements for mounting the carrycot or the infant seat on a stand or a support frame can be provided on the infant seat and/or on the carrycot. Said connecting elements can be designed for instance in such a manner that the infant seat or the carrycot can be mounted to the fastening elements of the stand by hooking the infant seat or the carrycot into a receiving groove or slot which form part of the fastening devices on the stand or on a base frame of a baby carriage.

A preferred embodiment of the present invention provides that the carrycot can be mounted by connecting elements onto fastening elements of a stand in a tiltable manner, being tilted about a horizontal axis, such that the carrycot can be brought in a desired angle position when mounted on the stand.

A further subject of the present invention is a process for manufacturing an infant seat of the kind described above, in which at least an upper shell of the infant seat is manufactured by heating first a laminate sheet comprising a structural layer (preferably ethylene vinyl acetate) and a soft layer (preferably an urethane layer), which results in a softening of the thermoplastic material and then bringing said sheet into shape in a thermoforming mold, if necessary under influence of a vacuum and cooling the molded sheet on the surface of the mold.

Preferably upper shell and lower shell are manufactured separately in such a process and then the perimeter region of both shells are connected by suitable connecting means, which results in an infant seat.

Preferably the infant seat according to the present invention is **characterized in that** the contour of the upper shell comprises at least one leg rest, one seat part and one back rest. These parts define one possible shape of the upper shell in general.

The features of the subclaims concern preferred embodiments of the present invention. Hence the invention is not limited to any embodiments described in the subclaims. Further advantages of the invention will arise from the following detailed description.

In the following description preferred embodiments of the present invention are described in more detail by reference to the drawings, which show:
Figure 1 a perspective view of an infant seat without a baby carriage in the mounted seat configuration;
Figure 2 a perspective exploded view of the main elements of an infant seat according the example of figure 1;
Figure 3 an enlarged perspective view of the carrycot only which belongs to the infant seat shown in figure 1, the carrycot being in its folded condition;
Figure 4 an enlarged perspective view of the carrycot shown in figure 3 in its unfolded condition ready for use;
Figure 5 a perspective view of a baby carriage base frame with an infant seat according to the example of figure 1 which can be mounted thereto;
Figure 5A an enlarged detailed view in the area of one of the joints also showing the connecting element for mounting the infant seat;
Figure 5B an enlarged detailed view of the base frame of the baby carriage, the fastening elements for mounting the infant seat being shown from the inner side;
Figure 6 a perspective view of a baby carriage with the infant seat mounted thereon;
Figure 7 a perspective view of a stand with the infant seat mounted thereto, forming a kind of high chair;
Figure 8 a view of a heating device for heating the laminate sheet before the molding process, which may be used in the manufacturing process according to the present invention;
Figure 9 a view of a thermoforming mold to be used in the process according to the present invention, wherein the mold is open in a state before the sheet is laid into the mold;
Figure 10 the thermoforming mold according to Figure 9 with the workpiece after the deformation process;
Figure 11 a schematic view of an infant seat of the present invention showing its shape in general.

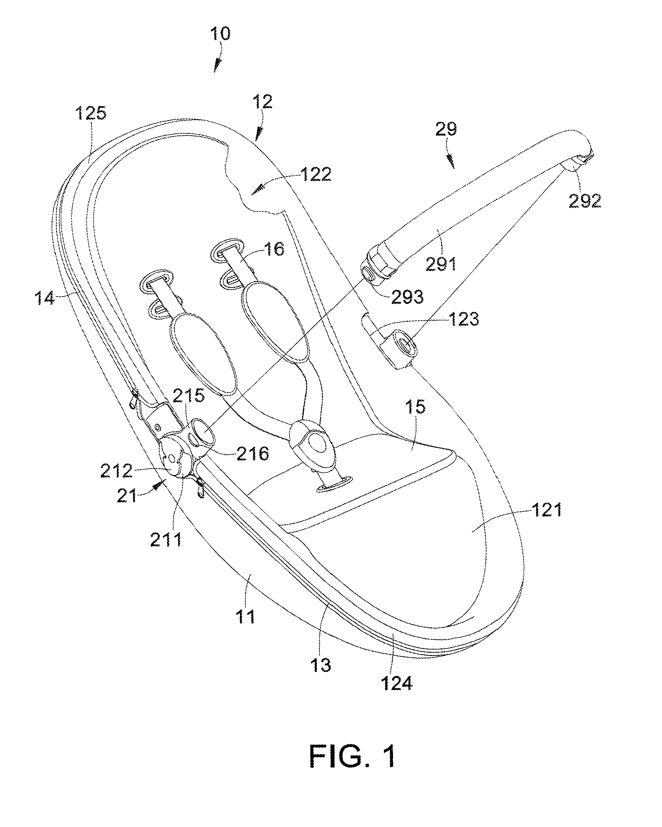

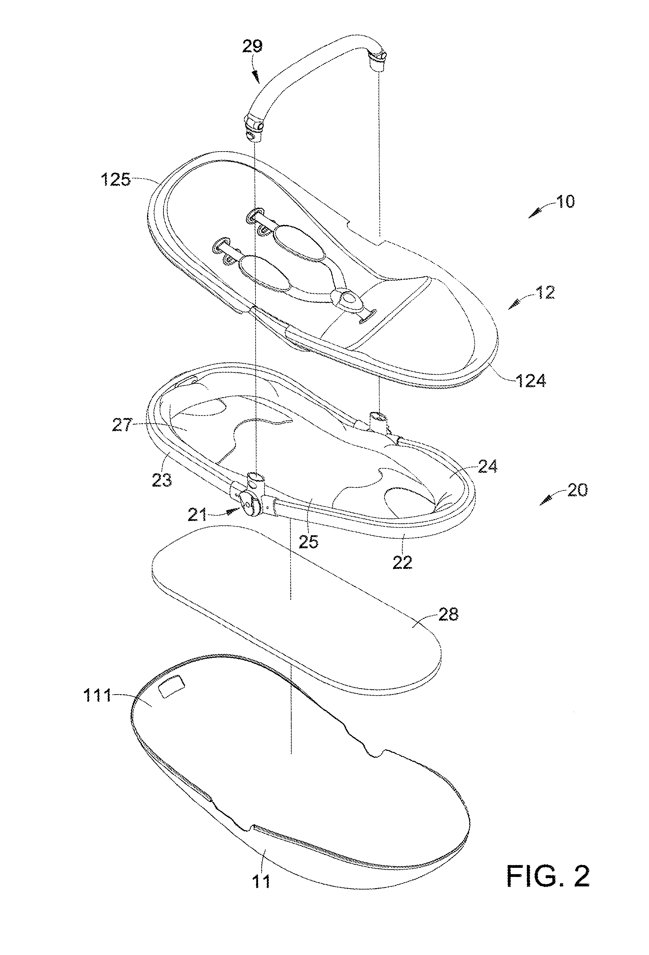

First we refer to figures 1 and 2 which show a perspective view of an infant seat according to an example of the present invention in assembled condition and as an exploded view of the main elements of said infant seat. The infant seat is referred to as 10 in its whole. As can be seen from figure 2 it comprises a lower shell 11, an upper shell 12, a carrycot 20 being stored and encased within the infant seat 10 in a folded condition, a cushion 28 and a handle bar 29 which can be mounted to the infant seat 10 or alternatively to the carrycot 20 in a detachable manner, in order to seize this handle bar and carry the infant seat or the carrycot in a comfortable manner. The lower shell 11 has a receiving space 111, it is open to the top and has a concave shape seen from above. It may be made of plastics, which is chosen such that the lower shell 11 is sufficiently solid, but can also be transformed slightly within certain limits. This means it is more solid than a mere textile fabric. As can be seen when comparing figures 1 and 2 the space (volume) required for the infant seat 10 essentially is defined by the size and shape of the lower shell 11. The overall height of the mounted infant seat 10 only is slightly higher than the lower shell 1 alone, as the further elements, namely the upper shell 12, which has an inclined seat shape on its upper side, and the carrycot 20 are received at least in their major part in the receiving space 11 of the lower shell in the mounted condition. This kind of nested configuration of said elements 11, 12, 20 allows the storage of the carrycot within the infant seat of figure 1. This results in the advantage that the mounted infant seat does not claim essentially more space than a conventional infant seat (without carrycot).

When starting from the mounted condition shown in figure 1 first the handle bar 29 is detached. This may be for example a snap or click connection comprising snap buttons 293 at the ends of two legs 291 of the handle bar. These two legs 291 each have a push end 292, which can be inserted into a receipt 215 of a socket in the area of the joints 21 on a frame of the infant seat 10. These joints 21 are disposed on the frame 22, 23 which belongs to the carrycot 20 (see figure 2), which in the mounted condition is also the frame of the infant seat 10 in its whole. This is possible because the joints 21 are accessible from the outside even in the mounted condition of the infant seat as can be seen from figure 1, the joints each being disposed in the area of a recess in the lower shell 11 which can be seen from figure 2. The snap buttons 293 lie in the snapped condition, the handle bar 29 being mounted, within the snap holes 216 of the sockets 215. If the user pushes onto the snap button from the outside, this moves inwardly, being mounted resiliently for instance with a spring, and the respective leg 291 of the handle bar can be pulled out of the receipt of the socket 215 and can be taken off.

The upper shell 12 forms a solid rest for the infant and has a feet rest 121, a back rest 122, a seat area 15 with if necessary a cushion and belts 16 can be provided to fasten the infant. The lower shell 11 and the upper shell 12 are for example connected to each other by one or several zip fasteners 13, 14. These zip fasteners are disposed on the one hand in the area of the borders 124, 125 of the upper shell 12 and on the other hand in the area of the edges of the lower shell 11. After these zip fasteners have been opened the upper shell 12 can be removed from the lower shell 11. Thereby the carrycot 20 inside is accessible and can be taken out as well as the cushion 12. First the carrycot 20 is arranged in the folded condition wherein it needs little space as can be seen from figure 2. The carrycot 20 in its outer dimensions (perimeter) preferably is somewhat smaller than the receiving space 111 of the lower shell 11 in its upper edge area, where the lower shell has its largest dimensions, such that the carrycot 20 with its outer frame 22, 23 fits into the lower shell 11. In its height the folded carrycot 20 does not claim much more space than itts outer frame as can be seen from figure 2.

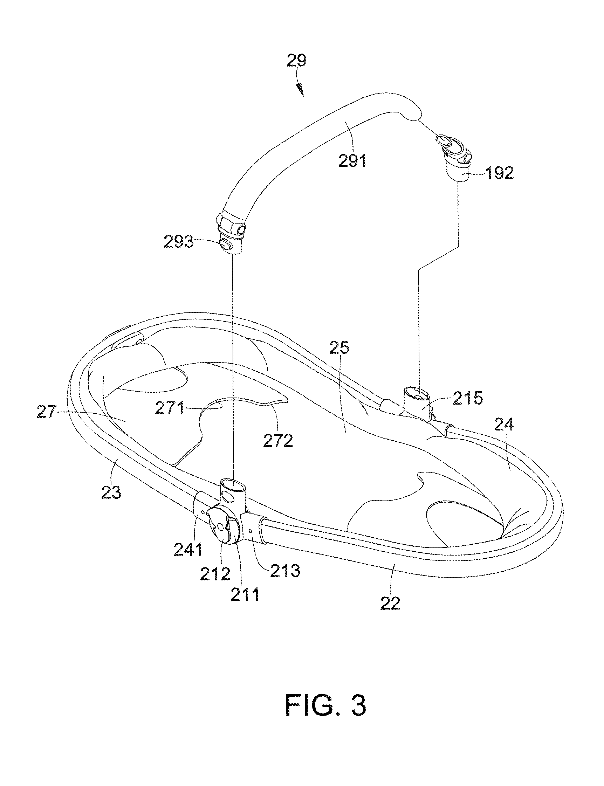

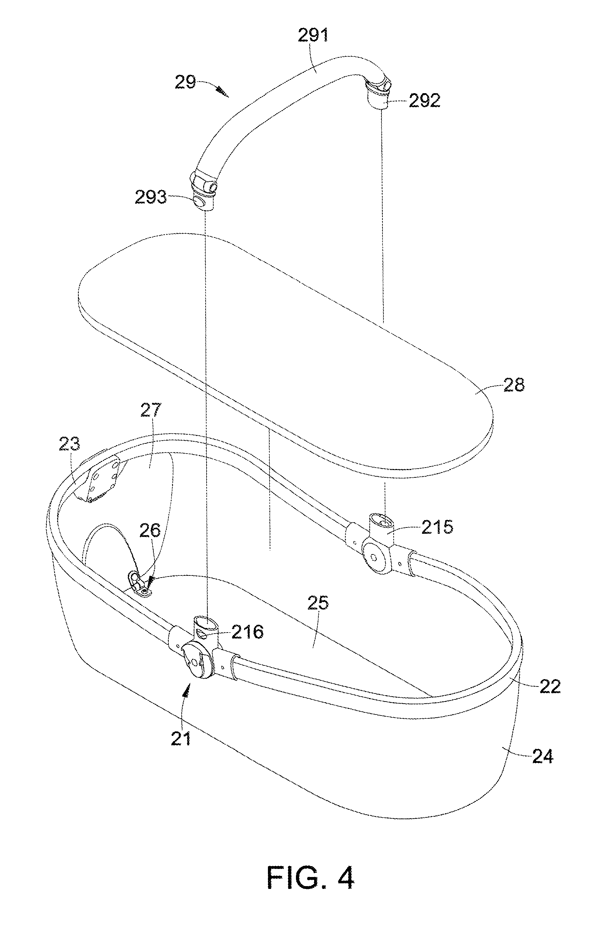

In the following the configuration of the carrycot 20 is described in more detail while referring to figures 2 to 4. Said carrycot comprises a bottom 25 which is sufficiently stable to support a baby, a foldable side area 24 comprising the side walls, a circumferential frame 22, 23 comprising two joints 21 being disposed essentially in the median area of the frame and lying opposite to each other. In the plan view the outline shape of the frame 22, 23 may be essentially an elongated oval shape. In the bottom 25 may be arranged plate like reinforcing elements which enhance the stability of the supporting structure. The cushion 28 may be insertable into the foot rest and back rest of the carrycot 20 after taking it out of the infant seat. The handle bar 29 is multifunctional as it can be mounted on the infant seat 10 in the complete seat configuration on one hand as can be seen from figure 1, in order to carry the infant seat 10. After taking out the encased carrycot 20, the handle bar 29 can be remounted with the ends of its legs 291 to the joints 21 on the frame of the carrycot 20 as can be seen from figures 3 and 4, such that the carrycot can be carried by means of the same handle bar 29.

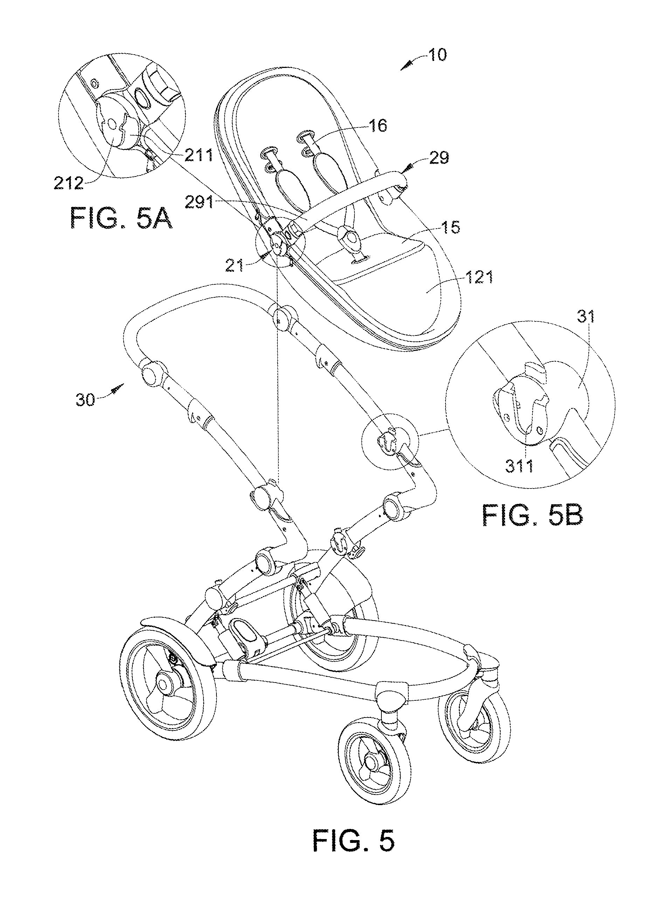

The two joints 21 which receive the respective bars of the frame 22, 23, which is composed of two essentially U-shaped brackets completing the elongated oval shape of the frame, each may have a T-shape with receiving sockets 215 directed to the top and two tubular sockets 213, 241 forming an angle of about 90 ° each to the receiving socket 215, said sockets 213, 241 thereby receiving the bars of the frame 22, 23. Furthermore located at the joints there is disposed a central connecting block 211 with an integrated connecting element 212, which serves to connect the infant seat 10 to the base frame of a baby carriage 30, which shall be explained in more detail referring to figure 5 hereafter.

The carrycot 20 having been taken out of the infant seat 10 and thus being in the folded configuration as shown in figure 3, can be unfolded by raising the circumferential frame 22, 23 in a direction perpendicular to the plane of the bottom 25, the fabric of the folded side walls of the side area 24 thereby being tensioned, such that the before low folded carrycot 20 is now transformed into a receptacle as shown in figure 4, in which a baby can be transported. In order to tension and stabilize the side area 24 in this unfolded state two plate-like support elements 27 are provided in the feet area and in the head area of the space of the carrycot 20, which can be pivoted outwards for about 90 ° from a lying state wherein they are arranged flat and parallel to the bottom 25 as shown in figure 3 into an upright position wherein they can be fixed by inserting them beneath the bars 22, 23 of the circumferential frame. One of the two support elements 27 can be seen in figure 4 in the upright position, wherein also hinge elements 26 are shown, on which the support element 27 is mounted pivoting to the bottom 25 of the carrycot. In figure 3 the shape of the support element 27 can be seen, which is made of a stiffer material which is, however, still somewhat flexible in order to make it possible to release it from the inserted position. The support element has a plate-like shape with a central recess 271 serving as engagement part such that there is the possibility to lay down the support element 27 starting from the vertical support position shown in figure 4, in which it is seized beneath the rim of the frame 23, by gripping into the recess 271, bulging and slightly bending the support element 27 to release it and lay it down into the flat position before folding the carrycot 20 into the flat configuration, thereby folding the textile side area 24 of the carrycot. The tensioning of the side area 24 and thereby unfolding of the carrycot 20 into the upright position ready for use according to figure 4 can be carried out with a small number of hand movements only. In said unfolded position the frame 22, 23 is arranged in an upper position, the side area 24 is unfolded and tensioned and it is stabilized by the support elements 27, such that the side area cannot be refolded by its own and the side area forms together with the bottom 25 a solid stable receptacle which delivers sufficient space to carry a baby or infant up to a certain age. The carrycot 20, however, may be unfolded (folding of the side area 24, see figure 3), such that it fits into the space between upper shell 12 and lower shell 11 and can be received by the receiving space 111 of the lower shell 11 (see figure 2) and in the mounted configuration according to figure 1 the device is both visually and functionally taken for an infant seat and can be used as such. The carrycot 20 in this mounted state (seat configuration) is even not recognized, as it is encased in a kind of sandwich configuration between the inner space of upper shell 12 and lower shell 11.

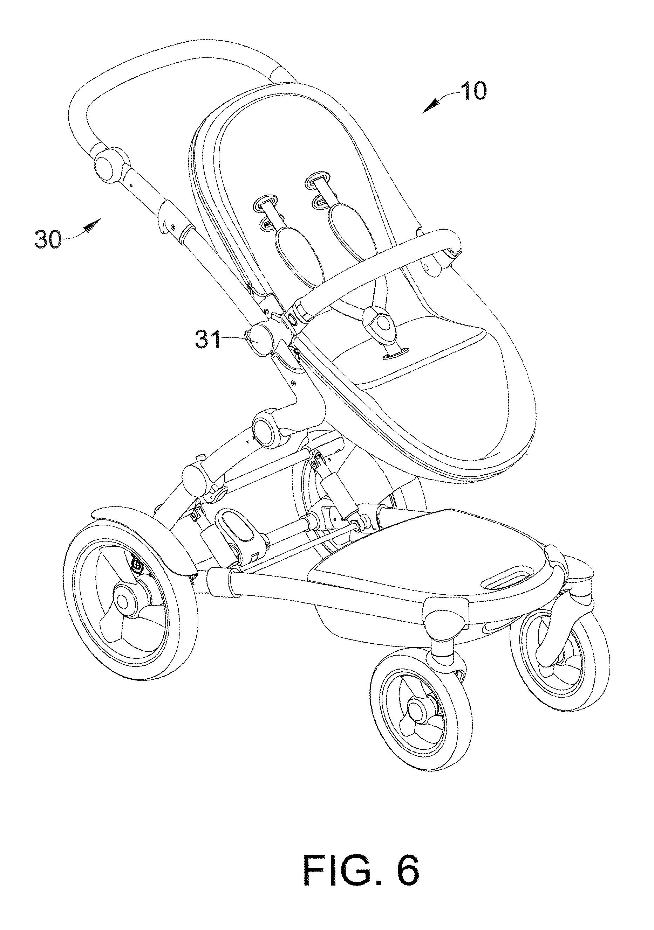

In the following the mounting of the infant seat 10 to a base frame 30 of a baby carriage is explained in more detail referring to figures 5, 5A and 5B. in the exploded view of figure 5 it can be seen that it is possible to put a complete infant seat 10 of the kind shown in figure 1 on the base frame 30 of a baby carriage and to fix the infant seat thereafter. This fixing can be done by means of mounting devices 31 disposed for example in the area of the joints of the frame. One of these mounting devices 31 is shown in figure 5B in an enlarged scale, thereby looking on the inner side of the base frame. It can be seen the undercut receiving groove 311 which may form part of the mounting device 31. Figure 5A shows in an enlarged scale the region of one of the joints 21 on the infant seat 10. There is provided the connecting block 211 comprising a flat protrusion as a connecting element 212, which can be pushed into the undercut receiving groove 311 and fits therein, such that the infant seat 10 may be hooked into the base frame 30 of the baby carriage. To assure a safe mounting, a snap connection with respective click elements may be provided (which is not shown), thereby avoiding an unintentional lift-off of the infant seat 10. In order to release the infant seat 10 from the base frame 30 first the snap connection has to be unlatched. Figure 5 intends to show the possibility to mount the infant seat 10 in a detachable manner onto the base frame 30 of a baby carriage. The resulting mounted configuration is shown in figure 6.

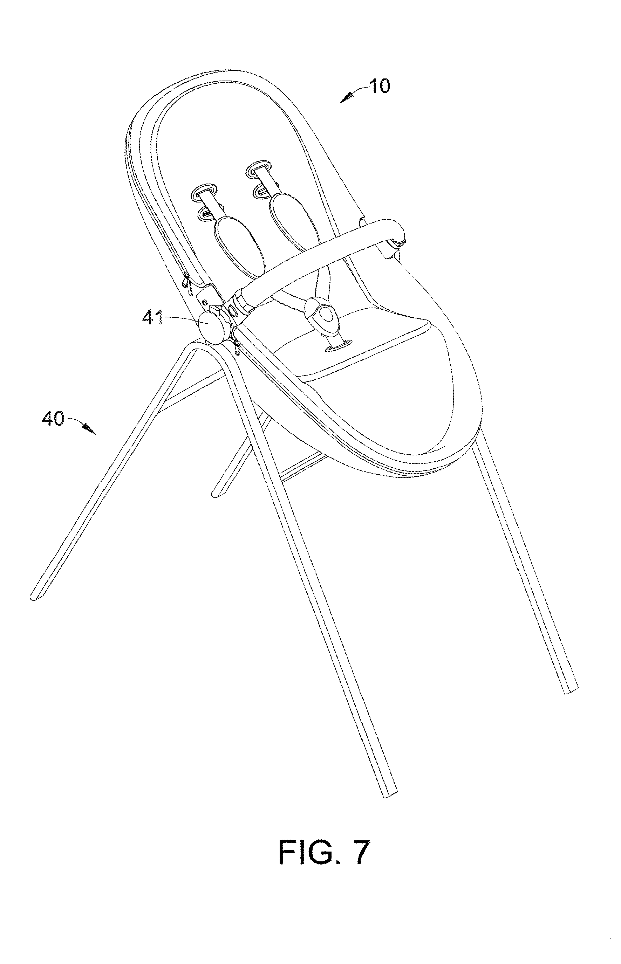

In the following it is referred to figure 7, wherein it is shown that the infant seat 10 according to the present invention cannot only be mounted onto a base frame of a baby carriage but also, for instance can be mounted to a stand 40 alternatively, as for example it is used in bath rooms to lay down a baby safely in a high position. Such a device as it is shown in figure 7 can also be used as a kind of high chair, in which the infant takes a lying or a sitting position. For this purpose two mounting devices 41 can be arranged on the stand 40, which can be designed in a similar manner as the mounting devices 31 on the base frame 30 as shown in figure 5B. Thus said mounting devices 41 can interact in a similar manner with the corresponding connecting elements 212 (see figure 5A) of the infant seat 10, when mounting the infant seat to the stand 40.

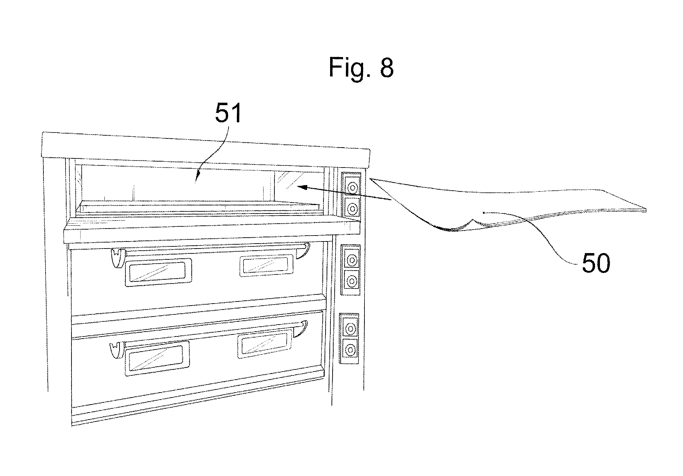

Hereafter with reference to figures 8, 9 and 10 the process for manufacturing the upper shell 12 of the infant seat 10 according to an example of the present invention is described in more detail. Figure 8 shows laminate sheet 50 of ethylene vinyl acetate and polyurethane in a flat state as a starting material, which is first put into a heating device 51 and which is heated therein for a time period of for example about 5 minutes up to a temperature of for example about 180 ° C to 190 ° C. The laminate sheet 50, which is softened, is then removed from the heating device 51, put into a mold of a thermoforming device and then molded and brought into a desired shape by the stroke of the mold, after said step having a desired pre-contour.

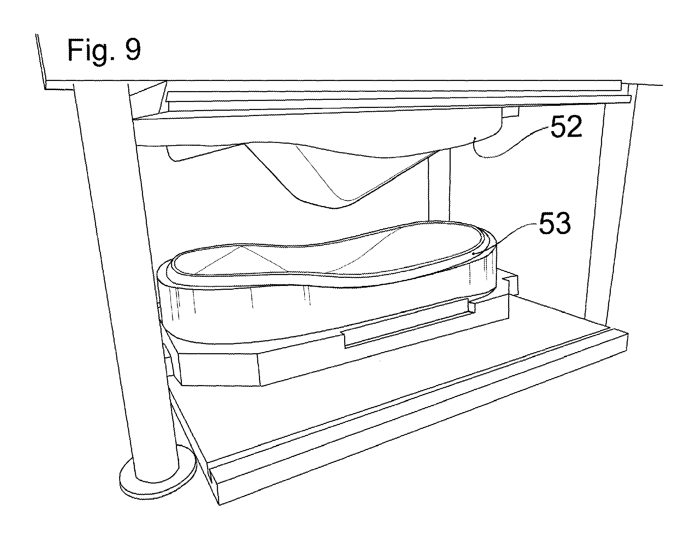

Figure 9 shows the open thermoforming device with the upper mold 52 and the lower mold 53, which define the contour of the upper shell to be produced, in a state before the insertion of the laminate sheet 50. Where appropriate a vacuum force on one side of the sheet is generated and pressurized air on the other side of the sheet is used to push the sheet against the wall of the thermoforming mold. The two parts 52, 53 of the mold thereby will be cooled to cool down and solidify the laminate sheet.

This process of cooling, shaping and solidifying may take some minutes, for example between about 3 and about 5 minutes. Thereafter the mold is opened and the shaped and solidified work piece (upper shell 54) can be taken out.

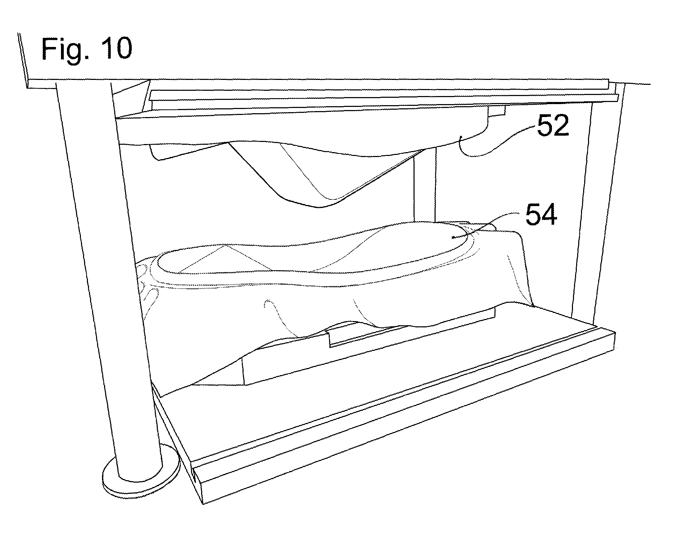

Figure 10 shows the open mold of the thermoforming device after deformation with the inserting work piece 54 before it is cut. By the following die cutting process the work piece 54 can be cut in its peripheral region into the final shape.

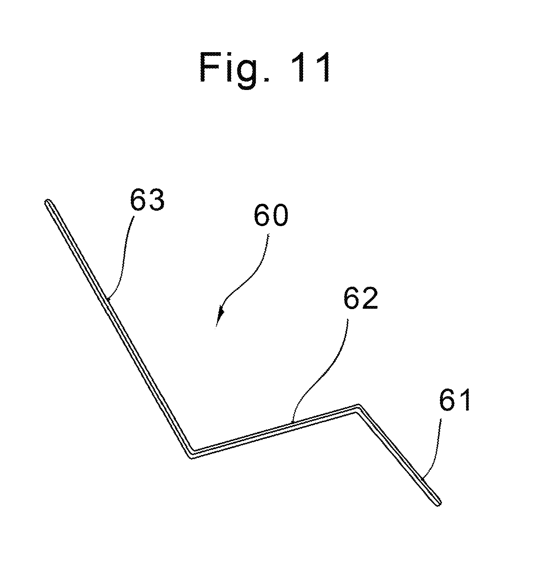

In the following reference is made to figure 11, showing in a schematic view of a section through the upper shell of an infant seat 60 according to a first embodiment of the present invention in order to illustrate the general shape of the infant seat. In this case the contour comprises a leg rest 61, a seat part 62 and a back rest 63. All these parts of the upper shell can be produced by thermoforming from a single laminate sheet comprising at least two layers, one structural layer and one softer layer. The structural layer may for instance be the surface layer, but an additional surface layer also may be added, which may be from fabric, leather, synthetic leather of the like. Alternatively or additionally a further layer for instance from fabric may be added at the lower side (backside) of the laminate.

As can be seen from the drawing according to figure 11, the respective angels as well as the relative lengths of the different parts of the seat contour can vary within a wide range. This drawing only shows very schematically the general shape of the infant seat in one possible embodiment.

### Reference numbers

- 10: infant seat
- 11: lower shell
- 111: receiving space
- 12: upper shell
- 121: feet rest
- 122: back rest
- 123: recess
- 124: border
- 125: border
- 13: zip fastener
- 14: zip fastener
- 15: seat area
- 16: belts
- 20: carrycot
- 21: joint
- 211: connecting block
- 212: connecting element (protrusion)
- 213: tubular socket
- 241: tubular socket
- 215: receipt of socket
- 216: snap holes
- 22: frame
- 23: frame
- 24: side area
- 25: bottom
- 26: joint elements
- 27: support elements
- 271: recess
- 28: cushion
- 29: handle bar
- 291: leg
- 292: push end
- 293: snap buttons
- 30: base frame of the carriage
- 31: mounting devices
- 311: receiving groove
- 40: stand
- 41: mounting devices
- 50: laminate sheet
- 51: heating device
- 52: upper mold
- 53: lower mold
- 54: work piece
- 60: infant seat
- 61: leg rest
- 62: seat part
- 63: back rest

## Claims

1. Infant seat, particularly for a releasable mounting on a baby carriage, which is shaped it its upper part according to a contour which enables an infant to take a sitting or lying position therein,
**characterized in that** said infant seat comprises at least one upper shell (12), which has been formed from a thermoplastic composite material in a thermoforming process.

2. Infant seat according to claim 1,
**characterized in that** as a starting material for the thermoforming process a sheet-like laminate (50) is used consisting of at least one thermoplastic material and at least one foam.

3. Infant seat according to claim 2,
**characterized in that** as a starting material for the thermoforming process a sheet-like laminate (50) is used consisting of at least one first layer of fabric, leather or synthetic leather and at least one second layer of a plastic material.

4. Infant seat according to one of claims 1 to 3,
**characterized in that** the laminate (50) used as the starting material comprises at least one layer of an ethylene vinyl acetate.

5. Infant seat according to one of claims 2 to 4,
**characterized in that** the laminate (50) used as the starting material comprises at least one layer comprising a urethane.

6. Infant seat according to one of claims 1 to 5,
**characterized in that** the upper shell (12) and/or the laminate (50) used as the starting material comprises an additional layer of a textile material on at least one of its surfaces.

7. Infant seat according to one of claims 2 to 6,
**characterized in that** said infant seat comprises in addition to said upper shell (12) at least one lower shell (11), which has also been manufactured from a thermoplastic layered starting material in a thermoforming process, wherein the upper shell (12) is shaped on its upper side according to a contour, which corresponds to a seating or lying position of an infant.

8. Infant seat according to claim 7,
**characterized in that** the upper shell (12) and the lower shell (11) lie upon each other and partly one within the other, thereby including a cavity between them.

9. Infant seat according to claim 7 or 8, **characterized in that** the upper shell (12) and the lower shell (11) are to be connected with each other circumferentially in their peripheral region to form one unit.

10. Infant seat according to one of claims 7 to 9, **characterized in that** at least one zip fastener, hook-and-loop fastener or any other appropriate connecting means are used to connect the upper shell (12) with the lower shell (11) with each other.

11. Infant seat according to one of the foregoing claims, **characterized in that** the contour of the upper shell (60) comprises at least one leg rest (61), one seat part (62) and one back rest (63).

12. Process for manufacturing an infant seat which is shaped it its upper part according to a contour which enables an infant to take a sitting or lying position therein, in accordance with one of claims 1 to 11, **characterized in that** at least an upper shell (12) of said infant seat is manufactured by first heating a thermoplastic laminate sheet (50) comprising a structural layer and a soft layer, thereby softening the thermoplastic material followed by a step, wherein the laminate sheet is deformed and shaped in a mold of a thermoforming device (52, 53), where appropriate under influence of a vacuum, then cooling the sheet at the wall of the mold to form an upper shell (12) with a contour which enables an infant to take a seating or lying position therein.

13. Process according to claim 12,
**characterized in that** the structural layer comprises an ethylene vinyl acetate and/or the soft layer comprises a polyurethane.
